# EUROPEAN PATENT SPECIFICATION

(11) **EP 0 713 687 B1**
(45) Date of publication and mention of the grant of the patent: **18.07.2001**
(21) Application number: 95830450.3
(22) Date of filing: 26.10.1995
(51) Int. Cl.: A61C 17/02, A61C 17/028

(54) **A dental syringe**
Zahnärztliche Spritze
Seringue dentaire

(30) Priority: 31.10.1994 IT BO940476
(43) Date of publication of application: 29.05.1996
(73) Proprietor: CASTELLINI S.p.A., I-40013 Castel Maggiore (Bologna) (IT)
(72) Inventor: Castellini, Franco, I-40123 Bologna (IT)
(74) Representative: Lanzoni, Luciano

(56) References cited:
- US-A- 4 249 899
- US-A- 4 619 612
- US-A- 4 886 452
- US-A- 4 902 225
- US-A- 4 944 675
- US-A- 5 271 087

## Description

The present invention relates to a dental syringe.

It is known that such a handpiece is used by the dentist using water (or a physiological solution) or air or a nebulized mixture of both, to clean or dry the area of the patient's mouth to be worked upon.

Such a syringe (see also European patent EP - 622.054) currently consists of a grip with a tubular body housing the mechanical, hydraulic and electrical parts designed to supply water and air. The front end of this tubular body is closed by a distributor nozzle for the afore-mentioned fluids, which may be connected to the feed unit using removable fixing means (so that it may be substituted while it is sterilized) and the back is closed by an external connector connected to the compressed air and water supply from the dental unit.

The outer surface of the tubular body also has two reference projections, these being the pushbuttons which activate, directly or by means of lever systems, the respective water and air cut-off valves, allowing the dentist to select the desired fluid supply. The syringe may also house an independent bulb which allows a band of light to be formed around the fluid supply zone.

A closer examination of the technical details reveals that the said independent water and air tubes run the length of the unit to the nozzle, the tubes being fitted with the said valves at an intermediate point, so as to allow the supply of the relative fluid only when required. The tubes may also be fitted with heating elements to heat the fluids which pass through them so that the fluids are supplied at the correct temperature for the patient; the heating elements can normally be activated when the syringe is removed from its support on the dental unit, or using a purpose-designed control on the grip of the syringe.

Patent US 4,886,452, which is considered the closest state of the art, shows a dental spray handpiece, consisting of a gripping sleeve having a media inlet connection at one end thereof and a media discharge at the other end. In the sleeve there are arranged two media conduits, of which one is connected to a air source and the other to a water source, and each of conduits has associated therewith a respective electrical heating device with an associated heating current circuit for the heating of each medium.

However, modern dental units are equipped with a heated water tank (often filled with common drinking water) fitted inside the base of the unit itself and used, for example, to fill the rinsing tumbler or supply the various operating handpieces or accessories, reducing the patient's discomfort as far as possible. Despite this, syringes continue to be produced with twin heating elements, for the air and water, partly to standardize the product, since it is impossible to know at the production stage the type of dental unit to which the product will be fitted (with or without heated tank): this factor obviously makes the dental syringes currently produced more expensive and cumbersome.

For this reason, the Applicant has designed and created a dental syringe of simple construction, economical, technically and practically specialized and suitable for use on dental units equipped with a heated water tank. The technical features of the present invention, in accordance with the said aims, are clearly described in the claims herein and the advantages of the invention are more clearly shown in the detailed description below, with reference to the accompanying drawings which illustrate an embodiment by way of example only, and in which:
- figure 1 is a side view of the dental syringe disclosed, with some parts shown in cross-section along a vertical plane of the syringe to better view others;
- figure 2 is a plan view of the dental syringe illustrated in figure 1, with some parts shown in cross-section to better view some of the details inside the syringe;
- figures 3 and 4 show cross-sections III - III and IV-IV shown in figure 1;
- figure 5 is a side section of the front part of the syringe disclosed, scaled-up with respect to figure 1.

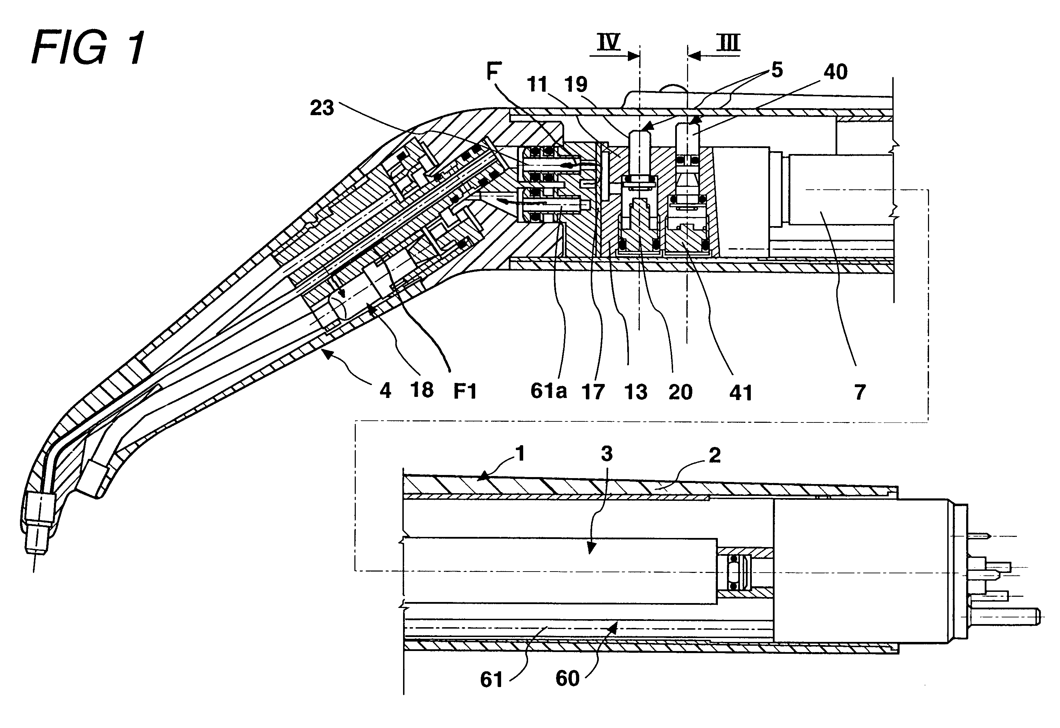

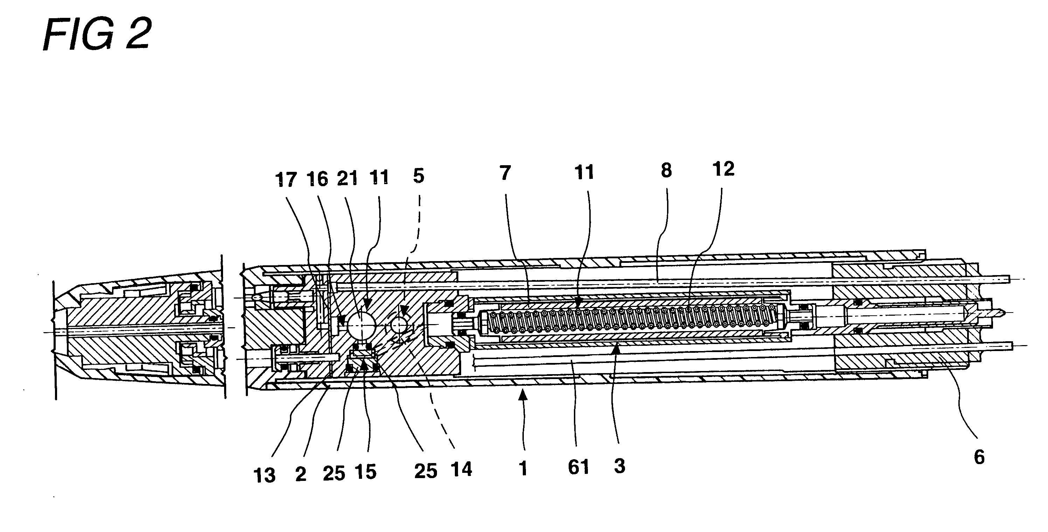

In accordance with the accompanying drawings, and in particular with reference to figures 1 and 2, the dental syringe disclosed is one of a set of handpieces used on dental units, and in particular is used to clean the patient's mouth during treatment.

This syringe includes a central grip 1 consisting of a tubular body 2 which houses a unit 3 for the selection and supply of water (or physiological solution) and air: the front end of the tubular body 2 is fitted with a distributor nozzle 4, while the back of the unit 3 can be fitted with a connector 6 for the supply of the said fluids under pressure.

The number 5 denotes means for the activation of the supply of the fluids which pass through the unit 3 and are described in further detail below, whilst the unit 3 includes a pair of first tubes 7 and 8, which run parallel to one another as far as the distributor nozzle 4. Both the means 11 for heating the passing fluids and the afore-mentioned supply activation means 5 operate on the pair of tubes 7 (air) and 8 (water), so that one or both may be supplied at a suitable temperature.

The structure of the syringe also envisages lighting means 18 for the operating zone through which the fluids pass to the distributor nozzle 4 (also described in further detail below).

Still observing figures 1 and 2, the heating means 11 consist of a single heating element 12 positioned inside the air tube 7 and of a block 13 located between the distributor nozzle 4 and the said heating element 12.

This block 13 contains part of the water tube 8, the LONGER PART of this tube lying outside the block 13, parallel with and close to the heating element 12, and the afore-mentioned fluid supply activation means 5. The block 13 also houses a second air tube 14 for the passage of pre-heated air from the tube 7 to the valve 15 (described. in detail below), said valve also being located inside the block 13.

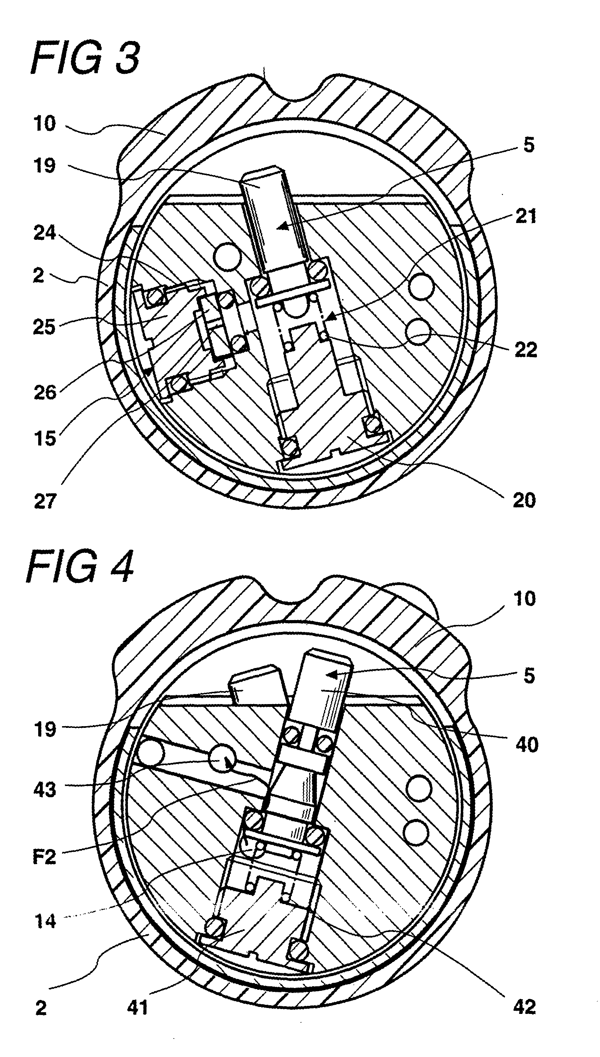

This valve 15 (visible in figure 4) allows air to pass into a first open chamber 16 set opposite a flexible element 17 which forms a partition between the first chamber 16 and the afore-mentioned first water tube 8 which extends in a "C" shape inside the block 13 and exits at the opposite side of the first chamber 16; the partition 17 also extends to separate the block 13 into two sectors and is made of a material which allows heat exchange between the two fluids.

As is more clearly shown in the following text, the partition 17 and the valve 15 also form the said means 5 for activation of the water supply from the first tube 8 to the distributor nozzle 4. In particular, the valve 15 consists of a seat 24 inside the block 13, into which a basic element 25 is screwed to form a seal, opposite a ring 26 with a central narrow opening 27 for the passage of air from the second tube 14 to the first chamber 16.

The water supply activation means 5 consist of a mobile pushbutton 19 located on and projecting into/from the block 13 (so that it can be operated from the exterior by applying pressure to the sleeve 10 of the tubular body 2). The pushbutton 19 is positioned opposite, but does not make contact with, a fixed sealed base 20 so as to define a second transit chamber 21; the two elements are, in fact, separated by a flexible element 22 (a spring) designed to hold the pushbutton 19 in a raised position in which the passage of water is not activated. The valve 15 gives onto the second chamber 21, connecting the latter to the first chamber 16 which holds the air and extends perpendicular to the position of the pushbutton 19 on the block 13: in this way, when the pushbutton 19 is pressed down a vacuum is created which allows the air to exit the latter, with relative flexing of the partition 17 (under the force of the water pressure) towards the first chamber 16, so that the water passes first into a bend created by the flexing of the partition 17, then into a third tube 23 parallel to the first tube 8, and extending into the distributor nozzle 4 (see arrow F in figure 1).

Similarly, the air supply activation means 5 (visible in figure 3) consist of a pushbutton 40 set opposite a basic sealing element 41, held apart by a spring 42; in the embodiment illustrated, when the pushbutton 40 is pressed down, it allows air to pass directly from the first tube 7 to a third tube 43 which extends towards the distributor nozzle 4 (see arrow F2 in figure 4).

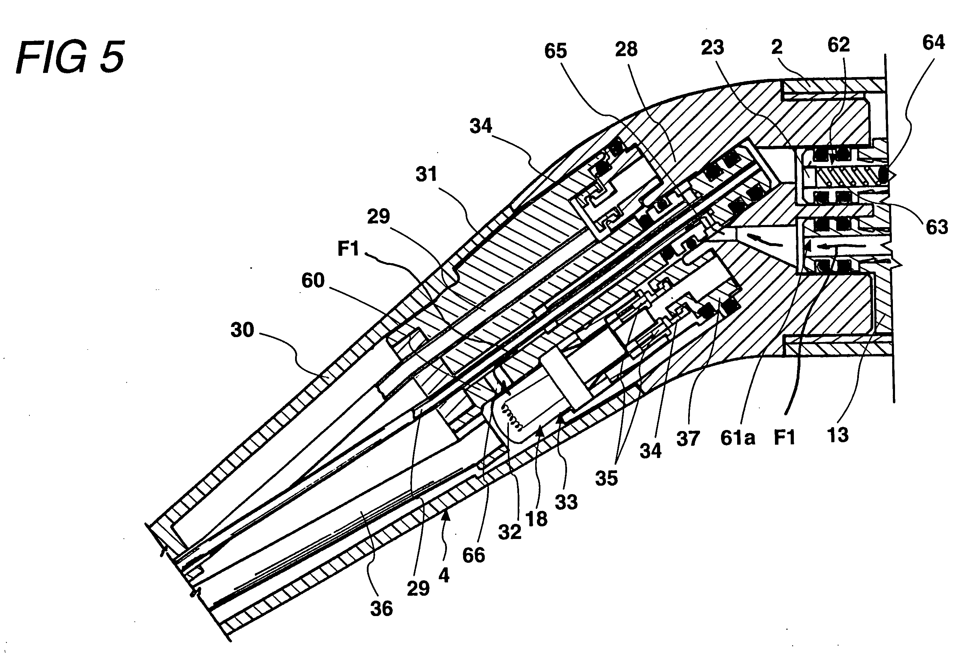

As is clearly visible in figure 5, the said third water tube 23 may be fitted with a one-way shutoff valve 62 (non-return valve); this valve 62 may be mechanical (as illustrated), that is to say, consisting of a spring 63 which acts upon a spherical stopper 64 or similar element, housed axially inside the third tube 23: in this way, should the air pressure in the first chamber 16 and so also on the partition 17 be absent for any reason, a column of water, whose pressure is discharged through suitable vents in the dental unit, is prevented from flowing out of the tubes in the distributor nozzle 4 and causing leaks.

Figure 5 also clearly illustrates the distributor nozzle 4 of the syringe disclosed, said distributor nozzle consisting of two distinct elements which can be fitted together: one is a fitting 28 with curved cross-section, which can be secured to the end of the tubular body 2 and connected and sealed directly to the block 13; this fitting houses the afore-mentioned third tubes 23 and 24 which connect the first tubes 7 and 8 and the fifth tubes 29 located inside a second end element 30 which defines a distributor nozzle 4. This end element 30 rotates freely about its own axis X and can be detached from the fitting 28; the end element 30 houses the afore-mentioned lighting means 18, which are secured to an internal support 31 that can be removed together with the end element.

In the embodiment illustrated in figure 5, the lighting means 18 consist of an incandescent bulb 32 fitted in a seat 33 on the internal support 31 and axially offset relative to the axis X of the end element 30. The back of the bulb 32 is connected to a double ring conductor 34 (which is, in turn, connected to a power source not illustrated) by means of a pair of contacts 35; the latter are flexibly held in constant contact with the double ring 34 so that the bulb 32 is supplied with power when the second end element 30 rotates. The double ring conductor 34 is also axially secured to a second, sealed, ring 37 fixed directly to the fitting 28.

A cable of optic fibres 36 is connected to the bulb 32, extending from the front of the bulb itself to the open distributor end of the end element 30, so as to create a band of light directly in the spray zone.

The bulb 32 is also fitted with cooling means 60, consisting of a sixth air tube 61 for the passage of air from the connector 6, where it connects with air supply channels on the dental unit (not illustrated here, since they are of the conventional type), into the said block 13 through a tube in the block which is not visible in figures 1 and 2 because it lies in a different plane, then giving onto a seventh tube 61a (similar to the third tube 23) connecting it to the distributor nozzle 4 (see arrow F1 in figures 1 and 5). Here the air passes through a gap 65 in the support 31 parallel to the fifth tubes 29, then gives onto the bulb 32 through a hole 66. The air, having cooled the bulb and become warm, is discharged through gaps (formed from the conventional connection of the elements which constitute the distributor nozzle).

The syringe structured in this way operates through the activation of the afore-mentioned pushbuttons 19 and 40, which allow the passage of the fluids under pressure from the first tubes 7 and 8 to the distributor nozzle 4, either separately or in a nebulized mixture.

The syringe is disassembled for sterilization by the rapid removal of the tubular body 2 secured to the distributor nozzle 4 from the unit 3. In particular, the distributor nozzle 4 can be disassembled (as is clearly shown in figure 5) by detaching the end element 30 from the fitting 28, after which it is possible to substitute the bulb 32.

The syringe therefore obtains the objects set, thanks to a compact, technically advanced structure, since the air and water are sufficiently heated by the single heating element and the block 13 with partition 17, which allow a good heat-exchange between the air and water without necessitating other internal heating elements.

The supply of water or physiological solution is activated by a pneumatic control (preferable due to its precision and fast activation) by means of the valve connected to the air tube under pressure and to the partition: such a structure is preferable to a direct water control, since direct valves are not recommended for contact with a physiological solution, which causes the formation of scale.

The present invention may be subject to numerous modifications, all encompassed by the original design concept, and all parts may be substituted with technically equivalent components.

## Claims

1. A dental syringe of the type which includes a central grip (1) including a tubular body (2) which houses a unit (3) for the selection and supply of water and air to an distributor nozzle (4) connected to the said unit in such a way that it may be removed at the front end of the tubular body (2), the latter also housing air and water supply activation means (5) which act upon the said unit (3), in turn connected to a connector (6) for the supply of the said fluids to the unit (3); the latter also having at least a pair of first tubes (7, 8) practically parallel to one another and exiting the said distributor nozzle (4); fluid heating means (11) and the said air and water supply activation means (5) acting upon the first tubes (7, 8) to allow the said fluids to be supplied individually or mixed together at a suitable temperature; said syringe also having lighting means (18) at the operating zone defined by the supply of the said fluids to the distributor nozzle (4), characterized in that it envisages the said heating means (11), consisting of at least one heating element (12) positioned inside the air tube (7) and a block (13) fitted between the distributor nozzle (4) and heating element (12) and housing a first part of the water tube (8), a second part of this tube lying outside the block (13), parallel with and close to the heating element (12); said block (13) housing the supply activation means (5) and a second air tube (14) for the passage of air from the relative tube (7) to a valve (15), also being located inside the block (13), allowing air to pass into a first open chamber (16) set opposite a flexible element (17) which forms a partition between the first chamber (16) and the first water tube (8) which exits at the opposite side of the first chamber, the partition (17) being made of a material designed to allow heat exchange between the fluids; the partition (17) and the valve (15) also forming part of the said means (5) for activation of the water supply from the first tube (8) to the distributor nozzle (4).

2. The dental syringe as described in claim 1, characterized in that the said water supply activation means (5) consist of a mobile pushbutton (19) located on and projecting into/from the block (13) and positioned opposite a lower fixed, sealed base (20) so as to define a second transit chamber (21); the base (20) and pushbutton (19) being separated by a flexible element (22) designed to hold the pushbutton (19) in a raised position in which the passage of water is not activated; the first chamber (16) which holds the air and extends perpendicular to the position of the pushbutton (19) giving onto the second chamber (21), so that when the pushbutton (19) is pressed down a vacuum is created which allows the air to exit the latter, with relative flexing of the partition (17) towards the first chamber (16), so that the water passes into a third tube (23) substantially parallel to the first tube (8), and extending into the distributor nozzle (4).

3. The dental syringe as described in claim 1, characterized in that the valve (15) consists of a seat (24) inside the block (13), into which a basic element (25) is screwed to form a seal, opposite a ring (26) with a central narrow opening (27) for the passage of air from the second air tube (14) to the first chamber (16).

4. The dental syringe as described in claim 1, characterized in that the distributor nozzle (4) consists of two distinct elements, one being a fitting (28) with curved cross-section, which can be secured to the end of the tubular body (2) and connected to the block (13) and having third tubes (23) which connect the first tubes (7, 8) and the fifth tubes (29) located inside a second end element (30) which defines the actual distributor nozzle (4), rotating freely about its own axis (X) and which can be detached from the fitting (28); the end element (30) housing the lighting means (18), which are secured to an internal support (31) that can be removed together with the end element.

5. The dental syringe as described in claim 4, characterized in that the lighting means (18) consist of an incandescent bulb (32) fitted in a seat (33) axially offset relative to the axis (X) of the end element (30) on the internal support (31); the back of the bulb (32) being connected to a double ring conductor (34) which is flexibly held in constant contact with the double ring (34) so that the bulb (32) is supplied with power when the second end element (30) rotates; the double ring conductor (34) being, in turn, secured to a second, sealed ring (37) fixed directly to the fitting (28).

6. The dental syringe as described in claim 5, characterized in that the bulb (32) is fitted with a cable of optic fibres (36), extending from the front of the bulb itself to the open distributor end of the second end element (30).

7. The dental syringe as described in claim 1, characterized in that the lighting means (18) are fitted with cooling means (60), consisting of a sixth air tube (61) for the passage of air from the connector (6), through the block (13) and giving onto the distributor nozzle (4) at a bulb (32) which forms the said lighting means (18).

8. The dental syringe as described in claim 2, characterized in that the third water tube (23) is fitted with a one-way shutoff valve (62) which acts upon the third tube, preventing the passage of water from the first tube (8) to the said third tube (23) should the air pressure in the first chamber (16) and on the partition (17) be absent.

9. The dental syringe as described in claim 1, characterized in that the partition (17) extends to separate the block (13) into two sectors and is made of a material which allows heat exchange between the two fluids.

## Patentansprüche

1. Zahnärztliche Spritze vom Typ, welcher einen mittleren Griff
(1) enthält, dieser enthaltend einen rohrförmigen Körper (2), welcher eine Einheit (3) zum Wählen und Zuführen von Wasser und Luft an eine Abgabedüse (4) aufnimmt, angeschlossen an die genannte Einheit auf solche Weise, dass sie an dem vorderen Ende des rohrförmigen Körpers (2) abgenommen werden kann, wobei letzterer ebenfalls Aktiviermittel (5) für die Luft- und Wasserzufuhr aufnimmt, welche auf die genannten Einheit (3) wirken, die wiederum an einen Verbinder (6) zum Zuführen der genannten Medien an die Einheit (3) angeschlossen ist; wobei letztere ebenfalls wenigstens ein Paar von Leitungen (7, 8) aufweist, die parallel zueinander verlaufen und an der genannten Abgabedüse (4) münden; wobei Heizmittel (11) für die Medien und die genannten Aktiviermittel (5) für die Luft- und Wasserzuführ auf die ersten Leitungen (7, 8) wirken, um es den genannten Medien zu erlauben, individuell oder gemischt und bei einer geeigneten Temperatur zugeführt zu werden; wobei die genannte Spritze ebenfalls Beleuchtungsmittel (18) in dem Arbeitsbereich enthält, der von der Abgabe der genannten Medien an der Abgabedüse (4) beschrieben wird, **dadurch gekennzeichnet,** dass die genannten Heizmittel (11) vorgesehen sind, bestehend aus wenigstens einem Heizelement (12), das im Inneren der Luftleitung (7) angeordnet ist, und einem Block (13), angebracht zwischen der Abgabedüse (4) und dem Heizelement (12) und einen ersten Teil einer Wasserleitung (8) aufnehmend, und zwar parallel zu und dicht an dem Heizelement (12), wobei sich ein zweiter Teil dieser Leitung ausserhalb des Blockes (13) befindet; wobei der genannte Block (13) die Aktiviermittel (5) zum Zuführen aufnimmt und auch eine zweite Luftleitung (14) für den Durchlass der Luft von der entsprechenden Leitung (7) bis zu einem Ventil (15) im Inneren des Blockes (13) angeordnet ist, welche es der Luft ermöglicht, in eine erste offene Kammer (16) zu strömen, die einem flexiblen Element (17) zugewandt angeordnet ist, welches eine Trennwand zwischen der ersten Kammer (16) und der ersten Wasserleitung (8) bildet, die an der entgegengesetzten Seite der ersten Kammer mündet, wobei die Trennwand (17) aus einem Material hergestellt ist, das einen Wärmeaustausch zwischen den Medien erlaubt; und wobei die Trennwand (17) und das Ventil (15) ebenfalls Teil der genannten Aktiviermittel (5) zur Wasserzufuhr von der ersten Leitung (8) an die Abgabedüse (4) bilden.

2. Zahnärztliche Spritze nach Patentanspruch 1, **dadurch gekennzeichnet,** dass die genannten Aktiviermittel (5) zur Wasserzufuhr aus einem beweglichen Druckknopf (19) bestehen, der an dem Block (13) angeordnet ist und in diesen hinein- oder herausragt und einer feststehenden, abgedichteten Basis (20) zugewandt angeordnet ist, so dass eine zweite Durchlaufkammer (21) gebildet wird; wobei die Basis (20) und der Druckknopf (19) durch ein flexibles Element (22) voneinander getrennt sind, das dazu dient, den Druckknopf (19) in einer angehobenen Position zu halten, in welcher der Wasserdurchlauf nicht aktiviert ist; wobei die erste Kammer (16), welche die Luft enthält und sich rechtwinklig zu der Position des Druckknopfes (19) erstreckt, der zweiten Kammer (21) zugewandt ist, so dass, wenn der Druckknopf (19) niedergedrückt wird, ein Vakuum entsteht, welches es der Luft erlaubt, durch letzteren auszutreten, und zwar mit einer entsprechenden Durchbiegung der Trennwand (17) in Richtung der ersten Kammer (16), so dass das Wasser in eine dritte Leitung (23), die im wesentlichen parallel zu der ersten Leitung (8) verläuft und sich bis in die Abgabedüse (4) erstreckt.

3. Zahnärztliche Spritze nach Patentanspruch 1, **dadurch gekennzeichnet,** dass das Ventil (15) aus einem Sitz (24) in dem Block (13) besteht, in welchen ein Basiselement (25) eingeschraubt wird, um eine Dichtung zu bilden, zugewandt einem Ring (26) mit einer mittleren, verengten Öffnung (27) für den Durchlass von Luft von der zweiten Luftleitung (14) bis zur ersten Kammer (16).

4. Zahnärztliche Spritze nach Patentanspruch 1, **dadurch gekennzeichnet,** dass die Abgabedüse (4) aus zwei verschiedenen Elementen besteht, von denen eins ein Verbindungsstück (28) mit einem gebogenen Querschnitt ist, welcher an dem Ende des rohrförmigen Körpers (2) befestigt und an den Block (13) angeschlossen werden kann, und der dritte Leitungen (23) aufweist, welche die ersten Leitungen (7, 8) und die fünften Leitungen (29) miteinander verbinden, letztere angeordnet im Inneren eines zweiten Endstückes (30), welches die eigentliche Abgabedüse (4) beschrheibt, sich frei um seine eigene Achse (X) dreht und von dem Verbindungsstück (28) abgenommen werden kann; wobei das Endstück (30) die Beleuchtungsmittel (18) aufnimmt, welche an einer internen Halterung (31) angebracht sind, die zusammen mit dem Endstück abgenommen werden kann.

5. Zahnärztliche Spritze nach Patentanspruch 4, **dadurch gekennzeichnet,** dass die Beleuchtungsmittel (18) aus einer Glühlampe (32) bestehen, befestigt in einem Sitz (33) an der internen Halterung (31), der im Verhältnis zu der Achse (X) des Endstückes (30) axial versetzt ist; wobei die Rückseite der Glühlampe (32) an einen Doppelringleiter (34) angeschlossen ist und flexibel ständig mit dem Doppelringleiter (34) in Kontakt gehalten wird, so dass die Glühlampe (32) mit Strom versehen wird, wenn sich das zweite Endstück (30) dreht; und wobei der Doppelringleiter (34) wiederum an einem zweiten, abgedichteten Ring (37) gesichert ist, letzterer direkt an dem Verbindungsstück (28) befestigt.

6. Zahnärztliche Spritze nach Patentanspruch 5, **dadurch gekennzeichnet,** dass die Glühlampe (32) mit einem Kabel aus Optikfasern (36) versehen ist, das sich von der Vorderseite der Glühlampe selbst bis an das offene Abgabeende des zweiten Endstückes (30) erstreckt.

7. Zahnärztliche Spritze nach Patentanspruch 1, **dadurch gekennzeichnet,** dass die Beleuchtungsmittel (18) mit Kühlmitteln (60) versehen sind, bestehend aus einer sechsten Luftleitung (61) für den Durchlass von Luft von dem Verbinder (6), durch den Block (13) und in die Abgabedüse (4) an eine Glühlampe (32), welche die genannten Beleuchtungsmittel (18) bildet.

8. Zahnärztlich Spritze nach Patentanspruch 2, **dadurch gekennzeichnet,** dass die dritte Wasserleitung (23) mit einem Einweg-Absperrventil (62) versehen ist, welches auf die dritte Leitung wirkt und den Durchlauf von Wasser von der ersten Leitung (8) zu der genannten dritten Leitung (23) verhindert, falls der Luftdruck in der ersten Kammer (16) und an der Trennwand (17) ausfallen sollte.

9. Zahnärztliche Spritze nach Patentanspruch 1, **dadurch gekennzeichnet,** dass sich die Trennwand (17) soweit erstreckt, dass sie den Block (13) in zwei Abschnitte unterteilt und aus einem Material hergestellt ist, welches den Wärmeaustausch zwischen den beiden Medien erlaubt.

## Revendications

1. Une seringue dentaire du type qui comprend une poignée centrale (1) comprenant un corps tubulaire (2) qui loge une unité (3) de sélection et d'alimentation d'eau et d'air vers une canule de distribution (4) reliée de manière amovible à cette même unité au niveau de l'extrémité avant du corps tubulaire (2), ce dernier logeant également des moyens (5) d'activation de l'alimentation d'air et d'eau qui agissent sur ladite unité (3), à son tour reliée à un raccord (6) pour l'alimentation de ces fluides à cette même unité (3); cette dernière comprenant aussi au moins une paire de premiers conduits (7, 8) quasi parallèles l'un par rapport à l'autre et débouchant dans ladite canule de distribution (4) ; des moyens (11) de chauffage des fluides et lesdits moyens (5) d'activation de l'alimentation d'air et d'eau agissant sur les premiers conduits (7, 8) pour permettre l'alimentation des fluides susmentionnés, séparément ou mélangés, à une température adéquate ; ladite seringue comprenant aussi des moyens d'éclairage (18) de la zone de travail définie par l'alimentation de ces fluides au niveau de la canule de distribution (4), caractérisée en ce qu'elle prévoit lesdits moyens de chauffage (11), consistant en au moins un élément chauffant (12) placé à l'intérieur du conduit d'air (7) et en un bloc (13) placé entre la canule de distribution (4) et l'élément chauffant (12) et logeant une première portion du conduit d'eau (8), une deuxième portion de ce conduit se trouvant à l'extérieur du bloc (13), parallèle à l'élément chauffant (12) en question et à proximité de ce dernier ; ledit bloc (13) logeant lesdits moyens (5) d'activation de l'alimentation et un deuxième conduit d'air (14) permettant le passage d'air du conduit (7) correspondant à une vanne (15), également placée à l'intérieur du bloc (13) et permettant à l'air de passer dans une première chambre ouverte (16) opposée à un élément flexible (17) qui définit une cloison entre ladite première chambre (16) et ledit premier conduit d'eau (8) qui débouche du côté opposé de cette même première chambre, la cloison (17) étant réalisée dans un matériau destiné à permettre un échange de chaleur entre les fluides ; la cloison (17) et la vanne (15) définissant également une partie des moyens (5) d'activation de l'alimentation de l'eau du premier conduit (8) à la canule de distribution (4).

2. La seringue dentaire selon la revendication 1, caractérisée en ce que lesdits moyens (5) d'activation de l'alimentation de l'eau consistent en un bouton-poussoir mobile (19) situé sur et dépassant dans/du bloc (13), et placé face à une base fixe (20) de fermeture inférieure, de manière à définir une deuxième chambre de passage (21) ; la base (20) et le bouton-poussoir (19) étant séparés par un élément flexible (22) destiné à maintenir le bouton-poussoir (19) dans une position haute dans laquelle le passage de l'eau n'est pas activé ; la première chambre (16) qui contient l'air et se développe perpendiculairement à la position du bouton-poussoir (19) débouchant dans la deuxième chambre (21), de sorte que lorsque le bouton-poussoir (19) est enfoncé, un vide se crée qui permet à l'air de sortir de ce dernier, avec flexion correspondante de la cloison (17) vers ladite première chambre (16), de sorte que l'eau passe dans un troisième conduit (23) essentiellement parallèle au premier conduit (8), et se développant dans la canule de distribution (4).

3. La seringue dentaire selon la revendication 1, caractérisée en ce que ladite vanne (15) consiste en un logement (24) interne au bloc (13), dans lequel un élément de base (25) est vissé de manière étanche, opposé à un anneau (26) présentant une étroite ouverture centrale (27) pour le passage de l'air du deuxième conduit d'air (14) à la première chambre (16).

4. La seringue dentaire selon la revendication 1, caractérisée en ce que ladite canule de distribution (4) consiste en deux éléments distincts, l'un étant un raccord (28) de section courbe, qui peut être fixé à l'extrémité du corps tubulaire (2) et relié au bloc (13), et ayant des troisièmes conduits (23) qui relient les premiers conduits (7, 8) et des cinquièmes conduits (29) situés à l'intérieur d'un deuxième élément d'extrémité (30) qui définit la canule de distribution (4) proprement dite, tournant librement sur son axe (X) et pouvant être détaché du raccord (28) ; l'élément d'extrémité (30) logeant les moyens d'éclairage (18), qui sont fixés à un support interne (31) qui peut être enlevé avec ce même élément d'extrémité.

5. La seringue dentaire selon la revendication 4, caractérisée en ce que lesdits moyens d'éclairage (18) consistent en une lampe à incandescence (32) placée dans un logement (33) axialement décalé par rapport à l'axe (X) de l'élément d'extrémité (30) sur le support interne (31) ; l'arrière de la lampe (32) étant relié à un double anneau conducteur (34) qui est maintenu de manière flexible en contact constant avec le double anneau (34) de sorte que la lampe (32) est électriquement alimentée quand le deuxième élément d'extrémité (30) tourne ; le double anneau conducteur (34) étant à son tour fixé à un deuxième anneau étanche (37) fixé directement au raccord (28).

6. La seringue dentaire selon la revendication 5, caractérisée en ce que ladite lampe (32) est pourvue d'un câble de fibres optiques (36), se développant depuis l'avant de la lampe elle-même jusqu'à l'extrémité de distribution ouverte du deuxième élément d'extrémité (30).

7. La seringue dentaire selon la revendication 1, caractérisée en ce que lesdits moyens d'éclairage (18) sont pourvus de moyens de refroidissement (60), consistant en un sixième conduit d'air (61) pour le passage de l'air du raccord (6), à travers le bloc (13) et jusqu'à la canule de distribution (4) au niveau d'une lampe (32) qui définit lesdits moyens d'éclairage (18).

8. La seringue dentaire selon la revendication 2, caractérisée en ce que ledit troisième conduit d'eau (23) est pourvu d'une vanne d'arrêt unidirectionnelle (62) qui agit sur ce même troisième conduit, empêchant le passage d'eau du premier conduit (8) au troisième conduit (23) en l'absence éventuelle de pression d'air dans la première chambre (16) et sur la cloison (17).

9. La seringue dentaire selon la revendication 1, caractérisée en ce que ladite cloison (17) se développe pour séparer le bloc (13) en deux secteurs et est réalisée dans un matériau qui permet un échange de chaleur entre les deux fluides.
